# FASCICULE DE BREVET EUROPEEN

(11) **EP 3 670 358 B1**
(45) Date de publication et mention de la délivrance du brevet: **10.11.2021**
(21) Numéro de dépôt: 19218104.8
(22) Date de dépôt: 19.12.2019
(51) Int. Cl.: B64F 5/10, B64F 5/60, G01N 27/90

(54) **SYSTÈME ET PROCÉDÉ DE DÉTERMINATION DE L'ÉCARTEMENT ENTRE DEUX PIÈCES EN UTILISANT DES CAPTEURS À COURANT DE FOUCAULT**
SYSTEM UND VERFAHREN ZUR BESTIMMUNG DES ABSTANDS ZWISCHEN ZWEI TEILEN MITHILFE VON WIRBELSTROM-SENSOREN
SYSTEM AND METHOD FOR DETERMINING THE SEPARATION BETWEEN TWO PARTS USING EDDY CURRENT SENSORS

(30) Priorité: 20.12.2018 FR 1873572
(43) Date de publication de la demande: 24.06.2020
(73) Titulaire: Airbus Operations, 31060 Toulouse (FR)
(72) Inventeur: AUFFRAY, Stéphane, 44410 Saint Lypard (FR)
(74) Mandataire: Santarelli

(56) Documents cités:
- EP-A1- 2 883 797
- CN-U- 207 026 319
- DE-A1-102009 018 991
- JP-A- 2002 160 077

## Description

La présente invention concerne un système et un procédé d'assemblage d'au moins deux pièces telles que des pièces formant le fuselage ou la voilure d'un aéronef.

L'invention trouve ainsi son application dans les opérations d'assemblage des pièces de grandes dimensions utilisées pour la formation du fuselage ou de la voilure d'un aéronef.

Par exemple, les pièces à assembler peuvent être des tronçons de fuselage. Lors de leur assemblage, les pièces sont mises en contact et ensuite fixées entre elles. En général, les pièces sont positionnées en superposition au niveau d'une zone d'assemblage où la fixation des pièces est mise en oeuvre.

L'assemblage des pièces formant le fuselage ou la voilure des aéronefs est mis en oeuvre avec rigueur et précision et l'écartement entre les pièces assemblées, au niveau de la zone d'assemblage ne doit pas dépasser des valeurs prédéfinies pour, entre autre, garantir une fixation stable des pièces.

Actuellement la formation des fuselages ou des voilures est automatisée. Ainsi, des outils de positionnement mettent en oeuvre le positionnement des pièces l'une à proximité de l'autre, ou dans une proximité immédiate, dans la zone d'assemblage. Les outils de positionnement sont assistés par des moyens d'aide, ou d'assistance, au positionnement.

Les moyens d'aide, ou d'assistance, au positionnement comportent typiquement des instruments de mesure de longueurs tels que des lasers de poursuite, connus aussi comme des lasers de repérage ou de relevé (« laser trackers » en terminologie anglo-saxonne). Les instruments de mesure de longueurs sont positionnés et configurés pour émettre des signaux destinés à atteindre des cibles situées dans les pièces à assembler.

Les cibles peuvent être des points de repère dans les pièces ou des éléments positionnés sur les pièces à assembler, par exemple des cibles réfléchissantes.

Pendant l'assemblage des deux pièces, le laser de poursuite interagit avec les cibles de manière à ce que les moyens d'aide ou d'assistance au positionnement déterminent le positionnement des cibles et par conséquent des pièces à assembler. Les outils de positionnement sont ainsi guidés par les moyens d'aide au positionnement jusqu'à ce que les pièces soient disposées l'une à proximité de l'autre dans une position d'assemblage prédéfinie. La position d'assemblage prédéfinie doit être comprise comme une position des pièces dans laquelle les pièces peuvent être solidarisées entre elles.

Une fois que les pièces sont placées dans la position d'assemblage prédéfinie, dans laquelle les pièces sont juxtaposées, un opérateur évalue manuellement l'écartement entre les deux pièces au niveau de la zone d'assemblage. Dans le cas de pièces faisant partie d'un fuselage d'aéronef, tel que des tronçons de fuselage, cette valeur est définie comme la distance locale entre la peau de deux tronçons de fuselage à assembler. Pour cette opération, l'opérateur peut utiliser soit des cales calibrées soit des appareillages dotés de sondes mesurant l'écartement entre les pièces.

Dans le cas des sondes, elles sont introduites entre les pièces pour réaliser ce type de mesures. Dans les deux cas, l'écartement entre les deux pièces est mesuré par des acquisitions dite intrusives, c'est à dire que l'action de mesurer peut interagir avec l'assemblage ou autrement dit, modifier l'écartement des peaux pendant l'opération de mesure.

Cette opération est répétée autant de fois que nécessaire et, en fonction des résultats obtenus, les pièces sont déplacées ou pas par les outils de positionnement de manière à ce que les pièces soient assemblées sans dépasser des valeurs d'écartement prédéterminées.

Une fois que les pièces sont positionnées de manière à ne pas dépasser une valeur d'écartement prédéterminée entre elles, les pièces sont solidarisées entre elles, par exemple par épinglage, puis par perçage et rivetage.

La vérification de l'écartement des pièces est ainsi une opération réalisée localement et manuellement par un opérateur.

Par ailleurs, JP2002160077 divulgue un outillage de soudage par friction malaxage pour le soudage de pièces selon des lignes de joint. L'outillage comprend, pour chaque ligne de joint, un outil de soudage à tête cylindrique rotative dont la position par rapport à la ligne de joint est contrôlée par un appareil de mesure du type caméra CDD ou capteur à courant de Foucault. L'outillage divulgué par JP2002 160077 ne permet pas de contrôler et d'ajuster la position relative de deux pièces à assembler.

Le document DE 10 2009 018991 A1 divulgue un système d'assemblage des pièces formant le fuselage d'un aéronef.

La présente invention a pour but de réduire les interventions des opérateurs afin d'améliorer les processus d'assemblage des pièces, telles que deux pièces du fuselage ou de la voilure d'un aéronef.

A cet effet, la présente invention concerne selon un premier aspect, un système d'assemblage d'au moins deux pièces, notamment des pièces formant le fuselage ou la voilure d'un aéronef, comportant des moyens d'aide au positionnement des pièces et des moyens de contrôle configurés pour commander des outils de positionnement en fonction de signaux provenant des moyens d'aide au positionnement de sorte à juxtaposer lesdites au moins deux pièces au niveau d'une zone d'assemblage.

Le système d'assemblage comporte en outre un ensemble de capteurs à courant de Foucault destiné à être positionné dans au moins l'une desdites au moins deux pièces, lesdits moyens de contrôle étant configurés pour l'acquisition des signaux provenant des capteurs de l'ensemble de capteurs, pour déterminer l'écartement desdites au moins deux pièces au niveau de la zone d'assemblage à partir des signaux acquis, et pour générer des commandes destinées aux outils de positionnement pour déplacer au moins l'une des pièces si l'écartement n'est pas conforme à un critère prédéterminé.

Grâce au système d'assemblage proposé, en plus de positionner les pièces dans une position dans laquelle elles peuvent être solidarisées entre elles, l'écartement entre les pièces peut être vérifié de manière automatisée lors des opérations d'assemblage des pièces. L'intervention d'un opérateur est ainsi évitée, ce qui réduit la durée des opérations d'assemblage et améliore la fiabilité des vérifications.

La durée d'une opération d'assemblage de deux pièces se trouve davantage réduite dès lors que plusieurs mesures d'écartement peuvent être prises en même temps à des emplacements différents.

En outre, les signaux provenant des capteurs, ainsi que les écartements déterminés peuvent être enregistrés de façon à avoir une traçabilité de ces données dans les opérations d'assemblage.

Par ailleurs, les capteurs à courant de Foucault permettent de mettre en oeuvre la détermination de l'écartement par les méthodes de contrôle non destructif (connues comme méthodes CND).

On notera que les capteurs à courant de Foucault sont utilisés aujourd'hui pour certaines vérifications dans le domaine aéronautique telles que la détection des fissures ou des zones de corrosion, la mesure de l'épaisseur de substrats métalliques ou de revêtements mais ne sont pas utilisés pour mesurer des écartements dans des opérations d'assemblage.

Selon d'autres caractéristiques possibles, prises isolément ou en combinaison l'une avec l'autre :
- lorsque l'écartement déterminé est conforme à un critère prédéterminé, l'écartement est inférieur ou égale à une valeur d'écartement prédéterminée ;
- les moyens d'aide au positionnement des pièces comportent des cibles destinées à être positionnées sur au moins l'une desdites au moins deux pièces, les capteurs à courant de Foucault étant disposés respectivement à proximité des cibles ;
- les capteurs à courant de Foucault sont reliés respectivement à des cibles des moyens d'aide au positionnement et sont liés via un outil de conception assisté par ordinateur (connu comme outil CAO) mis en oeuvre par les moyens de contrôle ;
- le système d'assemblage comporte en outre des moyens de génération de courants de Foucault, d'acquisition et de traitement de signaux provenant des capteurs à courant de Foucault, et des moyens de multiplexage disposés entre l'ensemble de capteurs et les moyens de génération, d'acquisition et de traitement, les moyens de génération, d'acquisition et de traitement étant configurés pour générer une onde électromagnétique destinée aux capteurs de l'ensemble et pour acquérir et traiter des signaux provenant des capteurs de courant à Foucault.

La présente invention concerne selon un deuxième aspect, un procédé d'assemblage d'au moins deux pièces, telles que des pièces formant le fuselage ou la voilure d'un aéronef, comportant le positionnement desdites au moins deux pièces de manière à ce qu'elles soient juxtaposées dans une zone d'assemblage en utilisant des outils de positionnement guidés par des moyens d'aide au positionnement. Le procédé d'assemblage comporte en outre des étapes de :
- acquisition de signaux provenant respectivement de capteurs à courant de Foucault situés à plusieurs emplacements d'au moins une desdites pièces ;
- détermination de l'écartement entre lesdites au moins deux pièces positionnées, au niveau de la zone d'assemblement à partir des signaux acquis ; et
- génération de commandes destinées aux outils de positionnement, pour déplacer au moins l'une desdites au moins deux pièces, si l'écartement déterminé n'est pas conforme à un critère prédéterminé.

Selon d'autres caractéristiques possibles, prises isolément ou en combinaison l'une avec l'autre :
- lorsque l'écartement déterminé est conforme à un critère prédéterminé, l'écartement est inférieur ou égale à une valeur d'écartement prédéterminée ;
- l'étape de génération de commandes est mise en oeuvre jusqu'à ce que le l'écartement déterminé soit conforme au critère prédéterminé ;
- lesdites au moins deux pièces sont deux tronçons de fuselage.

La présente invention concerne selon un troisième aspect, l'utilisation d'un système d'assemblage conforme à l'invention et mettant en oeuvre le procédé d'assemblage conforme à l'invention pour la formation d'un fuselage ou d'une voilure d'aéronef.

Le procédé d'assemblage et l'utilisation du système d'assemblage présentent des caractéristiques et avantages analogues à ceux décrits précédemment en relation avec le système d'assemblage.

D'autres particularités et avantages apparaîtront encore dans la description détaillée ci-après.

Aux dessins annexés, donnés à titre d'exemples non limitatifs :
[Fig. 1] la figure 1 est un schéma illustrant un système d'assemblage de deux pièces selon un mode de réalisation utilisé pour la formation d'un fuselage d'aéronef ;
[Fig. 2] la figure 2 est un schéma illustrant le système d'assemblage selon un mode de réalisation de l'invention ; et
[Fig. 3] la figure 3 est un schéma illustrant des étapes du procédé d'assemblage des deux pièces selon un mode de réalisation de l'invention.

L'invention trouve son application dans des opérations d'assemblage des pièces de grande dimension utilisées pour la formation d'un fuselage ou d'une voilure d'aéronef. Dans la description qui suit, des références sont faites à des pièces faisant partie d'un fuselage d'aéronef, tels que des tronçons de fuselage. Néanmoins, la description s'applique à d'autres pièces faisant partie d'un aéronef, par exemple à des pièces formant la voilure de l'aéronef ou toute autre pièce ayant une peau où un écartement prédéterminé entre la peau et celle d'une autre pièce est toléré.

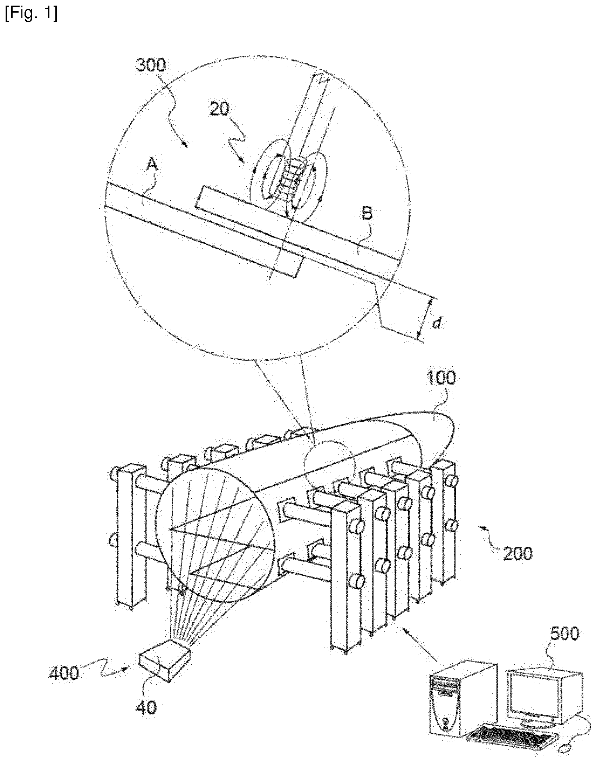

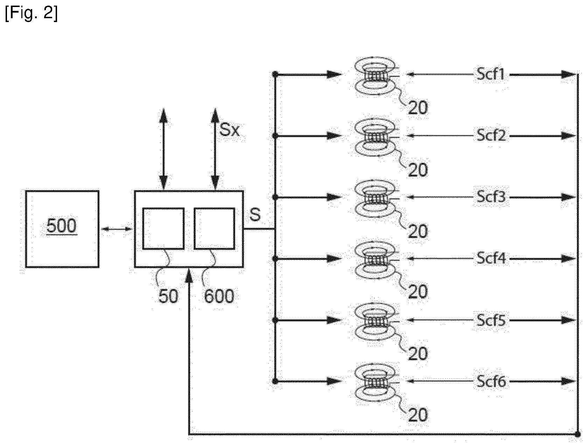

La **figure 1** représente une partie d'un fuselage 100 d'un aéronef dans une phase d'assemblage des différentes pièces formant le fuselage 100. A titre d'exemple nullement limitatif, le fuselage est un fuselage monocoque. En particulier, la figure 1 représente des contraintes de positionnement d'une couture longitudinale. Les pièces A, B doivent être solidarisées suivant un plan frontière. Ce plan frontière définie le positionnement des pièces A, B l'une par rapport à l'autre et l'écartement toléré entre elles. Comme il sera décrit ci-dessous, l'écartement ou jeu d'encastrement est déterminé par les capteurs à courants de Foucault. Le fuselage 100 est supporté par des éléments de support 200. Les pièces formant le fuselage 100 sont assemblées entre elles en utilisant un système d'assemblage. Un mode de réalisation du système d'assemblage sera décrit ci-dessous en référence aux figures 1 et 2.

Un détail du fuselage est représenté à la figure 1. Ce détail représente la zone d'assemblage 300 des pièces A, B ou zone où les pièces A, B seront solidarisées entre elles. Dans l'exemple représenté, les pièces A, B sont juxtaposées ou positionnées dans une proximité immédiate au niveau de la zone d'assemblage 300. Un écartement *d* est présent entre les pièces A, B dans cette zone d'assemblage 300.

Selon un mode de réalisation, le système d'assemblage d'au moins deux pièces A, B comporte des moyens d'aide au positionnement 400 des pièces A, B générant des signaux relatifs à la position des pièces A, B. Ces signaux sont utilisés pour commander le mouvement d'outils de positionnement afin de positionner les pièces A, B à des emplacements particuliers. Les outils de positionnement, guidés par des moyens d'aide au positionnement, sont des moyens connus de l'homme du métier.

Lors des opérations d'assemblage, les outils de positionnement (non représentés sur la figure) sont utilisés pour l'assemblement ou l'encastrement des pièces. On notera que lorsque les pièces doivent être assemblées de façon à être fixées l'une par rapport à l'autre, les outils de positionnement positionnent les pièces de manière à les juxtaposer ou à les positionner dans une proximité immédiate au niveau de la zone d'assemblement 300. Les pièces A, B sont fixées entre elles au niveau d'une zone d'assemblement 300.

Autrement dit, la zone d'assemblement 300 d'une pièce correspond à la partie de la pièce qui est fixée à une autre pièce, c'est-à-dire la zone ou partie où des moyens de fixation vont être installés de façon à solidariser une pièce A à une autre pièce B.

Les outils de positionnement sont guidés dans leur fonctionnement par des moyens de contrôle 500 générant des commandes destinées aux outils de positionnement en fonction des signaux provenant des outils d'aide au positionnement 400. Les moyens de contrôle 500 sont configurés pour la commande en fonctionnement du système d'assemblage.

Dans un mode de réalisation, les moyens d'aide au positionnement 400 des pièces A, B comportent un instrument de mesure de longueurs 40 permettant de déterminer la position d'au moins une pièce A, B.

On notera que si l'une des pièces A, B est fixée, et par conséquent sa position est connue, le moyen d'aide au positionnement 400 peut déterminer la position de la deuxième pièce qui va être assemblée à la première pièce.

Les moyens de positionnement 400 des pièces comportent en outre au moins une cible destinée à être positionnée sur au moins l'une des pièces A, B.

Une cible peut être formée par un emplacement prédéfini dans au moins d'une des pièces A, B, ou peut comporter un élément destiné à être positionné sur au moins l'une des pièces A, B.

L'instrument de mesure de longueurs 40 interagit avec les cibles de façon à déterminer la position d'au moins l'une des pièces A, B. Les outils de positionnement sont commandés en fonction des positions déterminées pour positionner les pièces A, B en position d'assemblage.

Les outils de positionnement et les moyens d'aide au positionnement 400 sont connus de l'homme du métier et ne seront pas décrits davantage ici.

Dans un mode de réalisation, le système d'assemblage comporte des moyens de détermination de l'écartement entre les deux pièces A, B au niveau de la zone d'assemblage 300 des pièces A, B.

Dans un mode de réalisation, les moyens de détermination comportent un ensemble de capteurs à courant de Foucault 20. Afin de simplifier les figures, un seul capteur 20 est représenté schématiquement à la figure 1 sur le détail de la zone d'assemblement 300. Néanmoins, les moyens de détermination comportent plusieurs capteurs à courant de Foucault 20 distribués dans la surface des pièces A, B au niveau de la zone d'assemblage 300 afin de déterminer de manière fiable l'écartement *d* entre les deux pièces A, B.

Dans un mode de réalisation, les capteurs à courant de Foucault 20 sont liés aux positions des cibles des moyens d'aide au positionnement 400.

Le positionnement des cibles est régi par un plan de contrôle. Le plan de contrôle comprend des règles et côtes permettant le positionnement correct des pièces. En particulier, le plan de contrôle définie l'écartement prédéterminé.

Dans ce mode de réalisation, l'installation du système d'assemblage se trouve alors facilitée dès lors que les cibles des moyens de positionnement 400 et les capteurs à courant de Foucault 20 sont positionnés sur les pièces A, B en même temps.

Dans d'autres modes de réalisation, les capteurs à courant de Foucault sont positionnés directement sur les pièces, indépendamment des cibles, par des moyens de fixation non définitifs tels que des collages ou des outillages flexibles à positionner sur la structure.

La **figure 2** illustre des éléments du système d'assemblage, en particulier des moyens de détermination de l'écartement d selon un mode de réalisation.

Selon un mode de réalisation, le système d'assemblage, en particulier les moyens de détermination de l'écartement *d* des deux pièces A, B, comporte des moyens de génération de courants de Foucault, d'acquisition et de traitement 50 de signaux provenant des capteurs à courant de Foucault 20. Afin de simplifier la description, les moyens de génération de courants de Foucault, d'acquisition et de traitement 50 de signaux provenant des capteurs à courant de Foucault 20 seront nommés moyens de génération 50 dans la description qui suit.

La figure 2 représente, à titre d'exemple nullement limitatif, six capteurs à courant de Foucault 20. Bien entendu, le nombre de capteurs 20 peut être différent, le nombre étant déterminé au cas par cas en fonction des pièces à assembler.

Les capteurs à courants de Foucault sont liés via un outil de conception assisté par ordinateur (connu comme outil CAO). L'outil CAO est mis en oeuvre par des moyens de contrôle 500.

Le générateur de courant de Foucault 50 est configuré pour générer un signal S destiné aux capteurs à courant de Foucault 20 de l'ensemble. Le signal est par exemple une onde électromagnétique. Comme pour la figure précédente, afin de simplifier la figure, un seul capteur à courant de Foucault 20 est représenté.

Le système d'assemblage comporte en outre des moyens de multiplexage 600 disposés entre les moyens de génération 50 et l'ensemble des capteurs à courant de Foucault 20. Les moyens de multiplexage 600 permettent que l'onde électromagnétique générée par les moyens de génération 50 atteigne chacun des capteurs à courant de Foucault 20 disposés sur au moins l'une des deux pièces A, B.

L'incidence de l'onde électromagnétique S générée par des moyens de génération 50 sur chacun des capteurs à courant de Foucault 20 modifie au moins un des paramètres des capteurs 20. Dans un mode de réalisation, les capteurs à courant de Foucault 20 comportent une bobine et génèrent en réponse à la réception de l'onde électromagnétique S un signal S_{CF} représentatif d'une variation d'impédance de la bobine, par exemple une différence de tension. Cette variation d'impédance représente la valeur de l'écartement *d* entre les deux pièces A, B. Chaque capteur à courant de Foucault 20 émet un signal S_{CF}, l'ensemble des signaux étant acquis par les moyens de contrôle à travers les moyens de multiplexage.

Les moyens de multiplexage ou multiplexeurs permettent ainsi de distribuer l'onde électromagnétique S générée par les moyens de génération 50 à chaque capteur à courant de Foucault 20, ainsi que d'acquérir les signaux S_{CF} en provenance de chaque capteur à courant de Foucault 20 générés en réponse à l'onde électromagnétique.

Les moyens de contrôle 500 sont configurés en outre pour déterminer l'écartement *d* entre les pièces A, B, en fonction des signaux S_{CF} provenant de l'ensemble des capteurs à courant de Foucault 20 en fonction de l'écartement d déterminé.

Selon un mode de réalisation, les commandes générées par les moyens de contrôle 500 sont destinées à commander le déplacement d'au moins l'une des pièces A, B, si l'écartement *d* déterminé n'est pas conforme à un critère prédéterminé.

Dans un mode de réalisation, un écartement *d* est conforme à un critère prédéterminé lorsque l'écartement est inférieur ou égal à une valeur d'écartement prédéterminée.

Ainsi, les moyens de contrôle 500 génèrent des commandes de déplacement d'au moins l'une des pièces A, B, si l'écartement *d* déterminé est supérieur à la valeur d'écartement prédéterminée.

Dans un mode de réalisation tel que celui représenté à la figure 2, les moyens de contrôle 500 peuvent recevoir des signaux Sₓ provenant de capteurs additionnels, ces capteurs étant de types différents des capteurs à courant de Foucault, tels que des capteurs d'ultrasons. Le type et le nombre de capteurs représentés sont donnés à titre illustratif et ne sont nullement limitatifs. Bien entendu, selon des modes de réalisation, certains des capteurs additionnels peuvent être présents ou pas et lorsqu'ils sont présents, l'être en nombre différent.

Dans un mode de réalisation, les moyens de contrôle 500 comportent un module d'interface ou interface homme-machine (IHM) comportant des moyens de visualisation des données relatives au positionnement et à l'écartement des pièces A, B. Ainsi, un opérateur peut par exemple surveiller l'opération d'assemblage, modifier des paramètres et vérifier des résultats.

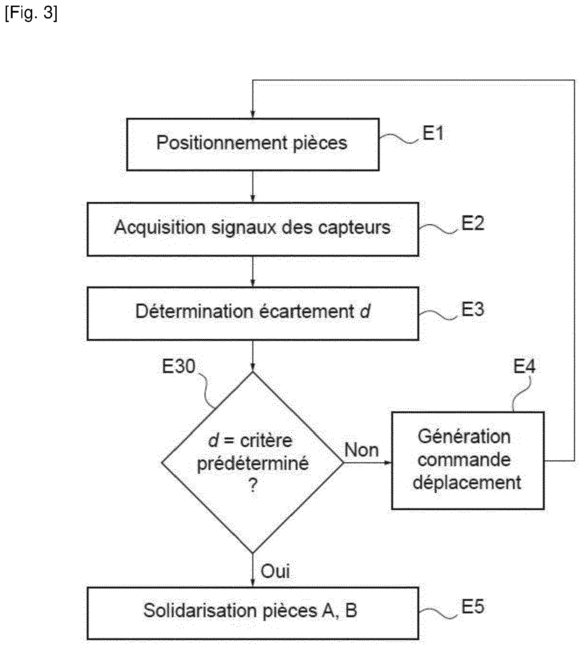

La **figure 3** illustre des étapes du procédé d'assemblage d'au moins deux pièces conforme à un mode de réalisation de l'invention.

Le procédé débute par une étape de positionnement E1 des pièces A, B pendant lequel les pièces A, B, sont positionnées de manière à être juxtaposées dans une zone d'assemblage 300. Comme indiqué ci-dessus, les positionnements des pièces A, B dans une proximité immédiate ou juxtaposition sont mis en oeuvre en utilisant des outils de positionnement qui sont guidés par des moyens d'aide au positionnement 400. Les moyens d'aide au positionnement 400 guident les outils de positionnement en fonction du plan de contrôle.

Une fois que les pièces A, B sont positionnées de sorte qu'elles puissent être solidarisées entre elles, l'écartement entre les deux pièces A, B au niveau de la zone d'assemblage 300 est déterminé. Pour mettre en oeuvre cette détermination plusieurs capteurs à courant de Foucault 20 sont positionnés respectivement à plusieurs emplacements dans au moins l'une des pièces A, B.

Dans un mode de réalisation, la pièce sur laquelle sont placés les capteurs à courant de Foucault 20 est la pièce B se trouvant placée plus à l'extérieur.

Bien entendu, dans d'autres modes de réalisation, la pièce sur laquelle sont placés les capteurs pourrait être la pièce placée le plus à l'intérieur ou des capteurs pourraient être positionnés sur les deux pièces.

Lors d'une étape d'acquisition E2 des signaux S_{CF} provenant respectivement des capteurs 20 de l'ensemble des capteurs sont acquis par les moyens de contrôle 500. Ensuite, une étape de détermination E3 de l'écartement d entre les pièces A, B au niveau de la zone d'assemblement 300 est mise en oeuvre pour déterminer l'écartement d à partir des signaux S_{CF} acquis.

Dans un mode de réalisation, si l'écartement d déterminé n'est pas conforme à un critère prédéterminé (définie par exemple par le plan contrôle), le procédé comporte la génération E4 des commandes destinées aux outils de positionnement, pour déplacer au moins l'une des pièces A, B. La conformité de la valeur d'écartement d déterminée, ou comparaison de cette valeur avec une valeur d'écartement prédéterminée, est mise en oeuvre lors d'une étape de vérification E30 de l'écartement *d.*

Dans un mode de réalisation, l'écartement est conforme à un critère prédéterminé s'il est inférieur ou égal à une valeur d'écartement prédéterminée. Ainsi, l'étape de génération des commandes E4 est mise en oeuvre si l'écartement déterminé est supérieur à une valeur d'écartement prédéterminée.

La commande générée à l'étape de génération E4 est destinée aux outils de positionnement qui mettent en oeuvre à nouveau l'étape de positionnement E1. Les étapes d'acquisition E2, de détermination E3 et de vérification E30 sont aussi mises en oeuvre à nouveau.

Dans un procédé d'assemblage selon un mode de réalisation, l'étape de génération des commandes E4 est mise en oeuvre jusqu'à ce que l'écartement déterminé soit conforme aux critères prédéterminés. Autrement dit, l'outil de positionnement positionne les pièces A, B à assembler guidé par les moyens d'aide au positionnement et par les moyens de détermination de l'écartement jusqu'à ce que la position des pièces A, B soit celle prédéfinie et que l'écartement d déterminé au niveau de la zone d'assemblage 300 soit inférieur ou égal à une valeur d'écartement prédéterminée de façon à ce que les pièces A, B puissent être solidarisées.

Ainsi, lorsque l'écartement d déterminé à l'étape de détermination E3 est conforme au critère prédéterminé (ou est inférieur d'une valeur d'écartement prédéterminée) selon un mode de réalisation, le positionnement des pièces est fini, l'opération de solidarisation E5 des pièces pouvant être mise en oeuvre.

Dans un mode de réalisation, le système d'assemblage comporte des moyens de mémorisation (non représentés sur les figures) sur lesquels sont stockées différentes données relatives au positionnement des pièces et la détermination de l'écartement, telles que des données provenant des capteurs à courant de Foucault 20. Par conséquent, différentes valeurs obtenues dans la mise en oeuvre du procédé peuvent être sauvegardées pour assurer une traçabilité des données pouvant être utilisées dans des opérations ultérieures à l'assemblage des pièces A, B.

Le procédé d'assemblage, décrit ci-dessus, peut être mis en oeuvre en utilisant un système d'assemblage conforme à des modes de réalisation tel que celui représenté par les figures, pour assembler des pièces d'un fuselage 100 ou d'une voilure (non représentée) d'un aéronef.

Ainsi les pièces sont assemblées deux par deux jusqu'à formation du fuselage 100 ou de la voilure.

Selon un mode de réalisation, le procédé comporte un étalonnage préalable des moyens de détermination de l'écartement *d* en utilisant les signaux S_{CF} provenant des capteurs 20. En effet, la réponse des capteurs à courant de Foucault 20 peut varier en fonction des matériaux dans lesquels sont réalisées les pièces A, B à assembler.

## Revendications

1. Système d'assemblage d'au moins deux pièces (A, B), notamment des pièces formant le fuselage (100) ou la voilure d'un aéronef, comportant des moyens d'aide au positionnement (400) des pièces et des moyens de contrôle (500) configurés pour commander des outils de positionnement en fonction de signaux provenant des moyens d'aide au positionnement (400) de sorte à juxtaposer lesdites au moins deux pièces (A, B) au niveau d'une zone d'assemblage (300), ledit système d'assemblage étant **caractérisé en ce qu'**il comporte en outre un ensemble de capteurs à courant de Foucault (20) destinés à être positionnés dans au moins l'une desdites au moins deux pièces (A, B), lesdits moyens de contrôle (500) étant configurés pour l'acquisition des signaux (S_{CF}) provenant des capteurs (20) de l'ensemble de capteurs (20), pour déterminer l'écartement (*d*) desdites au moins deux pièces (A, B) au niveau de la zone d'assemblage (300) à partir des signaux (S_{CF}) acquis, et pour générer des commandes destinées aux outils de positionnement pour déplacer au moins l'une des pièces (A, B) si l'écartement (*d*) n'est pas conforme à un critère prédéterminé.

2. Système d'assemblage conforme à la revendication 1, **caractérisé en ce que** lorsque l'écartement déterminé est conforme à un critère prédéterminé, l'écartement est inférieur ou égale à une valeur d'écartement prédéterminée.

3. Système d'assemblage conforme à l'une des revendications 1 ou 2, **caractérisé en ce que** les moyens d'aide au positionnement (400) des pièces (A, B) comportent des cibles destinées à être positionnées sur au moins l'une desdites au moins deux pièces (A, B) lesdits capteurs à courant de Foucault (20) étant disposés respectivement à proximité desdites cibles.

4. Système d'assemblage conforme à la revendication 3, **caractérisé en ce que** lesdits capteurs à courant de Foucault (20) sont reliés respectivement à des cibles des moyens d'aide au positionnement (400) et sont liés via un outil de conception assisté par ordinateur mis en oeuvre par les moyens de contrôle (500).

5. Système d'assemblage conforme à l'une des revendications 1 à 4, **caractérisé en ce qu'**il comporte en outre des moyens de génération de courants de Foucault, d'acquisition et de traitement (50) de signaux provenant des capteurs à courant de Foucault (20), et des moyens de multiplexage (600) disposés entre l'ensemble de capteurs (20) et lesdits moyens de génération, d'acquisition et de traitement (50), lesdits moyens de génération, d'acquisition et de traitement (50) étant configurés pour générer une onde électromagnétique (S) destinée auxdits capteurs (20) de l'ensemble et pour acquérir et traiter des signaux (S_{CF}) provenant des capteurs de courant à Foucault.

6. Procédé d'assemblage d'au moins deux pièces, telles que des pièces (A, B) formant le fuselage (100) ou la voilure d'un aéronef, comportant le positionnement (E1) desdites au moins deux pièces (A, B) de manière à ce qu'elles soient juxtaposées dans une zone d'assemblage (300) en utilisant des outils de positionnement guidés par des moyens d'aide au positionnement (400), ledit procédé d'assemblage étant **caractérisé en ce qu'**il comporte en outre des étapes de :
- acquisition (E2) de signaux (S_{CF}) provenant respectivement de capteurs à courant de Foucault (20) situés à plusieurs emplacements d'au moins une desdites pièces (A ; B) ;
- détermination (E3) de l'écartement entre lesdites au moins deux pièces (A, B) positionnées, au niveau de la zone d'assemblement (300) à partir des signaux acquis (S_{CF}) ; et
- génération (E4) de commandes destinées aux outils de positionnement, pour déplacer au moins l'une desdites au moins deux pièces (A, B), si l'écartement (d) déterminé n'est pas conforme à un critère prédéterminé.

7. Procédé d'assemblage conforme à la revendication précédente, caractérisé en ce lorsque l'écartement déterminé est conforme à un critère prédéterminé, l'écartement est inférieur ou égale à une valeur d'écartement prédéterminée.

8. Procédé d'assemblage conforme à l'une des revendications 6 ou 7, **caractérisé en ce que** l'étape de génération (E4) de commandes est mise en oeuvre jusqu'à ce que l'écartement (*d*) déterminé soit conforme au critère prédéterminé.

9. Procédé d'assemblage conforme à l'une des revendications 6 à 8, **caractérisé en ce que** lesdites au moins deux pièces (A, B) sont deux tronçons de fuselage (100).

10. Utilisation d'un système d'assemblage conforme à l'une des revendications 1 à 5 et mettant en oeuvre le procédé d'assemblage conforme à l'une des revendications 6 à 9 pour la formation d'un fuselage (100) ou d'une voilure d'aéronef.

## Patentansprüche

1. System zur Montage von zumindest zwei Teilen (A, B), insbesondere Teilen, die den Rumpf (100) oder das Tragwerk eines Luftfahrzeugs ausbilden, mit Mitteln (400) zur Unterstützung der Positionierung der Teile und Steuermitteln (500), die konfiguriert sind, um in Abhängigkeit von Signalen, die von den Positionierungsunterstützungsmitteln (400) ausgehen, Positionierungswerkzeuge zu steuern, um die zumindest zwei Teile (A, B) in einem Montagebereich (300) nebeneinander anzuordnen, wobei das Montagesystem **dadurch gekennzeichnet ist, dass** es ferner einen Satz von Wirbelstromsensoren (20) umfasst, die dazu bestimmt sind, in zumindest einem der zumindest zwei Teile (A, B) positioniert zu sein, wobei die Steuermittel (500) konfiguriert sind, um Signale (S_{CF}) zu erfassen, die von den Sensoren (20) des Satzes von Sensoren (20) ausgehen, um anhand der erfassten Signale (S_{CF}) den Abstand (d) der zumindest zwei Teile (A, B) im Montagebereich (300) zu bestimmen und um Befehle für die Positionierungswerkzeuge zu erzeugen, um zumindest eines der Teile (A, B) zu bewegen, wenn der Abstand (*d*) nicht einem vorbestimmten Kriterium entspricht.

2. Montagesystem nach Anspruch 1, **dadurch gekennzeichnet, dass** bei Übereinstimmung des bestimmten Abstands mit einem vorbestimmten Kriterium der Abstand kleiner als oder so groß wie ein vorbestimmter Abstandswert ist.

3. Montagesystem nach einem der Ansprüche 1 oder 2, **dadurch gekennzeichnet, dass** die Positionierungsunterstützungsmittel (400) der Teile (A, B) Ziele aufweisen, die dazu bestimmt sind, auf zumindest einem der zumindest zwei Teile (A, B) positioniert zu werden, wobei die Wirbelstromsensoren (20) jeweils in der Nähe der Ziele angeordnet sind.

4. Montagesystem nach Anspruch 3, **dadurch gekennzeichnet, dass** die Wirbelstromsensoren (20) jeweils mit Zielen der Positionierungsunterstützungsmittel (400) verbunden sind und über ein von den Steuermitteln (500) implementiertes computergestütztes Konzeptionswerkzeug verknüpft sind.

5. Montagesystem nach einem der Ansprüche 1 bis 4, **dadurch gekennzeichnet, dass** es ferner Mittel zum Erzeugen von Wirbelströmen, zum Erfassen und Verarbeiten (50) von Signalen, die von den Wirbelstromsensoren (20) ausgehen, und Multiplexmittel (600), die zwischen dem Satz von Sensoren (20) und den Erzeugungs-, Erfassungs- und Verarbeitungsmitteln (50) angeordnet sind, umfasst, wobei die Erzeugungs-, Erfassungs- und Verarbeitungsmittel (50) konfiguriert sind, um eine elektromagnetische Welle (S) zu erzeugen, die für die Sensoren (20) des Satzes bestimmt ist, und um Signale (S_{CF}), die von den Wirbelstromsensoren ausgehen, zu erfassen und zu verarbeiten.

6. Verfahren zur Montage von zumindest zwei Teilen, wie beispielsweise Teilen (A, B), die den Rumpf (100) oder das Tragwerk eines Luftfahrzeugs ausbilden, umfassend das Positionieren (E1) der zumindest zwei Teile (A, B), so dass sie in einem Montagebereich (300) nebeneinanderliegen, anhand von Positionierungswerkzeugen, die durch Positionierungsunterstützungsmittel (400) geführt werden, wobei das Montageverfahren **dadurch gekennzeichnet ist, dass** es ferner die folgenden Schritte aufweist:
- Erfassen (E2) von Signalen (S_{CF}), die jeweils von Wirbelstromsensoren (20) ausgehen, die sich an mehreren Stellen zumindest eines der Teile (A; B) befinden;
- Bestimmen (E3) des Abstands zwischen den zumindest zwei positionierten Teilen (A, B) im Montagebereich (300) anhand der erfassten Signale (S_{CF}); und
- Erzeugen (E4) von Befehlen, die für die Positionierungswerkzeuge bestimmt sind, um zumindest eines der zumindest zwei Teile (A, B) zu bewegen, wenn der bestimmte Abstand (*d*) nicht einem vorbestimmten Kriterium entspricht.

7. Montageverfahren nach dem vorangehenden Anspruch, **dadurch gekennzeichnet, dass** bei Übereinstimmung des bestimmten Abstands mit einem vorbestimmten Kriterium der Abstand kleiner als oder so groß wie ein vorbestimmter Abstandswert ist.

8. Montageverfahren nach einem der Ansprüche 6 oder 7, **dadurch gekennzeichnet, dass** der Schritt (E4) des Erzeugens von Befehlen solange durchgeführt wird, bis der bestimmte Abstand (*d*) dem vorbestimmten Kriterium entspricht.

9. Montageverfahren nach einem der Ansprüche 6 bis 8, **dadurch gekennzeichnet, dass** die zumindest zwei Teile (A, B) zwei Rumpfabschnitte (100) sind.

10. Verwendung eines Montagesystems nach einem der Ansprüche 1 bis 5 und Durchführung des Montageverfahrens nach einem der Ansprüche 6 bis 9 zur Ausbildung eines Rumpfs (100) oder eines Tragwerks eines Luftfahrzeugs.

## Claims

1. System for assembling at least two parts (A, B), in particular parts forming the fuselage (100) or the wings of an aircraft, including means (400) for aiding the positioning of the parts and control means (500) configured to control positioning tools as a function of signals emanating from the positioning aid means (400) so as to juxtapose said at least two parts (A, B) at the level of an assembly zone (300), said assembly system being **characterized in that** it further includes a set of Eddy current sensors (20) intended to be positioned in at least one of said at least two parts (A, B), said control means (500) being configured to acquire signals (SCF) emanating from the sensors (20) of the set of sensors (20) to determine the separation (d) of said at least two parts (A, B) at the level of the assembly zone (300) on the basis of the signals (SCF) acquired and to generate commands addressed to the positioning tools to move at least one of the parts (A, B) if the separation (d) does not conform to a predetermined criterion.

2. Assembly system according to Claim 1, **characterized in that** if the separation determined conforms to a predetermined criterion the separation is less than or equal to a predetermined separation value.

3. Assembly system according to either one of Claims 1 or 2, **characterized in that** the means (400) for aiding positioning of the parts (A, B) include targets intended to be positioned on at least one of said at least two parts (A, B), said Eddy current sensors (20) being respectively disposed in proximity to said targets.

4. Assembly system according to Claim 3, **characterized in that** said Eddy current sensors (20) are respectively connected to targets of the positioning aid means (400) and are connected via a computer assisted design tool used by the control means (500).

5. Assembly system according to any one of Claims 1 to 4, **characterized in that** it further includes means for generation of Eddy currents, acquisition and processing (50) of signals emanating from the Eddy current sensors (20) and multiplexing means (600) disposed between the set of sensors (20) and said generation, acquisition and processing means (50), said generation, acquisition and processing means (50) being configured to generate an electromagnetic wave (S) addressed to said sensors (20) of the set and to acquire and to process signals (S_{CF}) emanating from the Eddy current sensors.

6. Method of assembling at least two parts, such as parts (A, B) forming the fuselage (100) or the wings of an aircraft, including positioning (E1) said at least two parts (A, B) so that they are juxtaposed in an assembly zone (300) using positioning tools guided by positioning aid means (400), said assembly method being **characterized in that** it further includes steps of:
- acquisition (E2) of signals (SCF) emanating from respective Eddy current sensors (20) situated at several locations on at least one of said parts (A; B);
- determination (E3) of the separation between said at least two parts (A, B) positioned at the level of the assembly zone (300) on the basis of the acquired signals (SCF); and
- generation (E4) of commands addressed to the positioning tools to move at least one of said at least two parts (A, B) if the separation (*d*) determined does not conform to a predetermined criterion.

7. Assembly method according to the preceding claim, **characterized in that** if the separation determined conforms to a predetermined criterion the separation is less than or equal to a predetermined separation value.

8. Assembly method according to either one of Claims 6 or 7, **characterized in that** the step (E4) of generation of commands is executed until the separation (*d*) determined conforms to the predetermined criterion.

9. Assembly method according to any one of Claims 6 to 8, **characterized in that** said at least two parts (A, B) are two fuselage (100) sections.

10. Use of an assembly system according to any one of Claims 1 to 5 using the assembly method according to any one of Claims 6 to 9 for the formation of a fuselage (100) or the wings of an aircraft.
